# EUROPÄISCHE PATENTSCHRIFT

(11) **EP 3 083 377 B1**
(45) Veröffentlichungstag und Bekanntmachung des Hinweises auf die Patenterteilung: **28.02.2018**
(21) Anmeldenummer: 14814766.3
(22) Anmeldetag: 05.12.2014
(51) Int. Cl.: B62D 25/20, B62D 29/04, B62D 35/02, B60R 13/08

(54) **UNTERBODENAUSSTEIFUNGS- UND VERKLEIDUNGSMODUL**
UNDERBODY STIFFENING AND COVERING MODULE
MODULE D'HABILLAGE ET DE RENFORCEMENT DE DESSOUS DE CAISSE

(30) Priorität: 18.12.2013 DE 102013021403
(43) Veröffentlichungstag der Anmeldung: 26.10.2016
(73) Patentinhaber: Daimler AG, 70327 Stuttgart (DE)
(72) Erfinder: BJEKOVIC, Robert, 89584 Ehningen (DE); SALKIC, Asmir, 89077 Ulm (DE)
(74) Vertreter: JENSEN & SON
(86) Internationale Anmeldenummer: PCT/EP2014/003267
(87) Internationale Veröffentlichungsnummer: WO 2015/090526

(56) Entgegenhaltungen:
- DE-A1-102008 056 146
- DE-A1-102010 014 515
- DE-A1-102010 014 517
- US-A1- 2007 114 816

## Beschreibung

Die Erfindung betrifft ein Unterbodenaussteifungs- und Verkleidungsmodul sowie einen Kraftfahrzeug-Unterboden. Die DE 10 2008 056 146 A1 offenbart ein gattungsgemäßes Modul. Versteifungsstreben werden in Kraftfahrzeugkarosserien oft diagonal am Unterboden verbaut, um das Verwinden während des Fahrbetriebs zu reduzieren, insbesondere bei Cabrios, deren Karosserie-Steifigkeit infolge des fehlenden Dachs vermindert ist. Es ist auch möglich, Streben dort einzusetzen, wo eine vermehrte Vibrationsneigung zu erwarten ist. Dadurch wird gezielt zusätzliche Steifigkeit erhalten und die Eigenfrequenz des jeweiligen Karosseriebereichs erhöht, sodass die Vibrationen in einem Frequenzband stattfinden, das nicht als störend empfunden wird. Dies betrifft insbesondere Bereiche der Karosserie, in die Kräfte und/oder Momente eingeleitet werden, also etwa im Bereich der Lagerung der Motor-/Getriebeeinheit sowie im Bereich der Radantriebe und/oder Fahrwerksaufhängung.

Die DE 10 2011 009 442 A1 und die DE 10 2010 053 346 A1 offenbaren einen mit einer Diagonalstrebenvorrichtung verstärkten Kraftfahrzeugunterboden. Die Diagonalstrebenvorrichtung weist eine Anzahl von Streben aus einem faserverstärkten Material auf, die sich von einem zentralen Knoten weg erstrecken, wobei die Streben jeweils an ihren freien Enden über ein Anbindungsknotenelement an den Unterboden angebunden werden können, das aus einem Leichtmetall besteht. Die Anbindungsknotenelemente können jeweils formschlüssig oder über eine stoffschlüssige Gussverbindung mit dem Ende der Streben verbunden sein.

Der Kraftfahrzeugunterboden wird häufig verkleidet, um Feuchte und Schmutzeinwirkung auf Fahrwerksteile und die genannten Streben zu verhindern. Die Unterbodenverkleidung besteht aus flächigen Verkleidungsteilen, die jeweils einen Teil des Unterbodens abdecken. Bei der Kraftfahrzeugmontage können die Verkleidungsteile erst montiert werden, wenn Fahrwerksteile und Versteifungsstreben fertig montiert sind.

Ein solches Verkleidungsteil wird durch die DE 195 21 632 A1 beschrieben. Es handelt sich dabei um ein Spritzgussteil mit vergleichsweise dünner Wandstärke, das aus einem elastischen Material gefertigt ist und randseitig über Schraubverbindungen mit Versteifungsstreben, die am Unterboden vorliegen, verbunden ist. Zur Verbindung des Verkleidungsteils mit den Streben kommen Halteklammern zum Einsatz, die verhindern sollen, dass das vergleichsweise biegeschlaffe und flächige Bauteil durchhängt.

Um Vibrationen und Scheuern am Unterboden und den darauf angebrachten Streben zu vermeiden, muss die Unterbodenverkleidung, mit Ausnahme der Befestigungs- oder Anschraubpunkte beabstandet zum Unterboden und zu den Streben angebracht werden. Hierdurch geht wichtiger Bauraum verloren.

Ausgehend von diesem Stand der Technik ist es Aufgabe der vorliegenden Erfindung, ein Unterbodenaussteifungs- und Verkleidungsmodul zu schaffen, mit dem es bei der Kraftfahrzeugherstellung schneller und mit weniger Montagematerial möglich ist, einen Unterboden sowohl zu versteifen als auch zu verkleiden und weniger Bauraum zu beanspruchen.

Diese Aufgabe wird durch ein Unterbodenaussteifungs- und Verkleidungsmodul mit den Merkmalen des unabhängigen Anspruchs 1 gelöst.

Weiterbildungen sind jeweils in den Unteransprüchen ausgeführt.

Das erfindungsgemäße Unterbodenaussteifungs- und Verkleidungsmodul weist ein flächiges, nichttragendes Verkleidungsbauteil aus einem Kunststoffmaterial auf, mit dem eine oder mehrere Versteifungsstrebe(n) verbunden ist/sind. Die Versteifungsstrebe(n) erstreckt/erstrecken sich jeweils entlang eines vorgegebenen Lastpfads und weisen an ihren Endabschnitten jeweils eine Anbindungsvorrichtung auf, mit der sie gemeinsam mit dem Verkleidungsbauteil an Krafteinleitungspunkten mit einem vorgegebenen Unterbodenabschnitt verbindbar ist beziehungsweise sind.

Stoffschlüssige Verbindungen im Sinne der Erfindung sind Verbindungen, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Die Versteifungsstrebe dient hierbei nicht primär der Aussteifung des Verkleidungsbauteils, sondern vielmehr der Aussteifung einer Kraftfahrzeugkarosserie am Unterboden, um eine bestimmte Verwindungssteifigkeit zu erhalten. Das erfindungsgemäße Unterbodenaussteifungs- und Verkleidungsmodul vereint nun aber zwei Funktionen in sich, nämlich die Funktion der Versteifungsstreben und die Funktion der Unterbodenabdeckung, wodurch sich die Montage eines verstärkten und verkleideten Kraftfahrzeugunterbodens im Bandablauf deutlich beschleunigen lässt und Verbindungsmittel eingespart werden können, da das Verkleidungsbauteil und die kraftleitenden Versteifungsstreben mit gemeinsamen Verbindungsmitteln, etwa Schrauben, angebracht werden können. Außerdem wird Bauraum eingespart. Die Unterbodenverkleidung muss nun nicht mehr zusätzlich zur Versteifungsstrebe beabstandet werden, da die Versteifungsstrebe bereits ein Teil der Unterbodenverkleidung darstellt.

Das Verkleidungsbauteil, beziehungsweise seine flächigen Bereiche, muss nur eine geringe mechanische Belastbarkeit haben, da es außer den aerodynamischen Kräften und möglichen Kräften beim Kontakt mit Fahrbahnhindernissen keine weiteren Betriebskräfte übertragen muss. Es kann daher sehr dünnwandig ausgeführt werden, beispielsweise als eine widerstandsfähige "Kunststoff-Haut". Der Lastpfad wird auf Basis bestimmter Steifigkeitsrandbedingungen für den jeweiligen zu versteifenden Unterboden bestimmt, es können auch die gleichen Lastpfade verwendet werden, wie sie an einem existierenden Unterboden bisher auch schon mit Streben versteift werden. Bei den Streben kann es sich sowohl um Zug- als auch um Druckstreben handeln, wobei der Strebenquerschnitt im Hinblick auf die jeweilige zu erwartende Belastungsart optimiert werden kann, um etwa eine höhere Sicherheit gegen Ausknicken zu erhalten.

In einer weiteren Ausführungsform kann das Verkleidungsbauteil zwei oder mehr Lagen aufweisen, zwischen die die Versteifungsstrebe eingebettet ist. Die Lagen liegen in einem Kontaktbereich, in dem die Versteifungsstrebe nicht vorliegt, aneinander an und sind stoffschlüssig verbunden.

Eine der Lagen ist dabei eine akustisch aktive Lage, etwa eine Lage mit einer vorbestimmten Porosität bzw. mit Kammern einer vorbestimmten Größe, die zur Dämpfung bestimmter Frequenzen dimensioniert ist. Diese Lage kann besonders vorteilhaft zwischen zwei belastbareren Lagen eingebettet sein, die die akustisch aktive Lage schützen. Die akustisch aktive Lage ist bevorzugt aus einem Polymerschaum gebildet. Das Schaummaterial kann in mehrere Kammern untergliedert sein. Hierdurch ergibt sich vorteilhafterweise ein Sandwichaufbau mit einer Kernlage aus Dämpfungsmaterial und/oder Versteifungsstrebe und Decklagen, beziehungsweise äußeren Lagen aus belastbarem Kunststoff. Die äußeren Lagen können hierbei sehr dünnwandig ausgeführt sein, wobei es sich dabei etwa um eine belastbare Kunststofffolie handeln kann. Die akustisch aktive Lage muss hierbei nicht vollflächig zwischen den beiden "Decklagen" vorliegen, sondern kann auch nur lokal dazwischen angeordnet sein, um lokal eine verbesserte Geräuschdämpfung zu erreichen.

Gemäß einer noch weiteren Ausführungsform kann das Unterbodenaussteifungs- und Verkleidungsmodul zumindest eine weitere Versteifungsstrebe aufweisen, die sich entlang eines weiteren vorgegebenen Lastpfads erstreckt. Die Versteifungsstrebe und die weitere Versteifungsstrebe können sich kreuzen und an dem Kreuzungspunkt miteinander verbunden sein.

Erfindurigsgemäß hat eine vorteilhafte Ausführungsform der Erfindung noch mehr als zwei Streben, die sich quasi netz- oder spinnenetzartig durch das Unterbodenaussteifungs- und Verkleidungsmodul erstrecken können. Hierdurch kann der Unterboden einer Kraftfahrzeugkarosserie in mehreren Richtungen gezielt ausgesteift werden, wobei die Streben in Abhängigkeit der über den jeweiligen Lastpfad zu übertragenden Kräfte einen angepassten Querschnitt haben können. Die Montage eines solchermaßen "mehrfach ausgesteiften" Unterbodenaussteifungs- und Verkleidungsmoduls ist nicht mit Mehraufwand verbunden; vielmehr entspricht der Montageablauf im Wesentlichen dem des Anbringens einer gewöhnlichen Unterbodenabdeckung. Das Unterbodenverkleidungsmodul kann dabei flach oder auch gewölbt oder geknickt sein. Bevorzugt liegen die Knickstellen des Unterbodenverkleidungsmoduls an den Enden oder Kanten der Versteifungsstreben vor, so dass die Versteifungsstreben selbst geradlinig ohne Knickpunkte verlaufen.

Darüber hinaus kann das Verkleidungsbauteil zur Einbettung der Versteifungsstrebe eine oder mehrere Rinne(n) aufweisen, in die die Versteifungsstrebe(n) eingelegt ist/sind, wobei der Querschnitt der Rinne(n) vorteilhaft mit dem Querschnitt der Versteifungsstrebe(n) korrespondiert und die Versteifungsstrebe stoffschlüssig mit der Rinne verbunden ist.

Vorteilhaft kann das Verkleidungsbauteil aus zwei Halbschalen zusammengesetzt sein, von denen jedes eine Rinne aufweist, die gegenüberliegend angeordnet sind und die zusammen quasi einen "Aufnahmekanal" für die Versteifungsstrebe bilden. Die Versteifungsstrebe kann mit diesen Halbschalen beispielsweise mit einer Kunststoff-Vergussmasse oder einem Kleber vergossen sein, wodurch das Vordringen von Feuchte/Schmutz zur Versteifungsstrebe auch dann verhindert werden kann, wenn eine der Lagen bzw. eine Halbschale bspw. durch einen Fremdkörperkontakt beschädigt ist.

Schließlich kann die Anbindungsvorrichtung zum Unterboden eine Bohrung sein, die sich durch die Versteifungsstrebe und das Verkleidungsbauteil erstreckt. Alternativ oder zusätzlich kann die Versteifungsstrebe einen Hohlquerschnitt haben. Die Versteifungsstrebe kann einen kreisförmigen, rechteckigen, elliptischen oder polygonalen Querschnitt haben. Bevorzugt besteht die Versteifungsstrebe aus einem faserverstärkten Kunststoff (FVK), insbesondere aus Kohlenstofffaser-verstärktem Kunststoff (CFK).

Die Bohrung erstreckt sich vorteilhaft durch alle Lagen des Verkleidungsbauteils und durch die Versteifungsstrebe selbst, sodass eine Schraube oder ein anderes Verbindungsmittel durchgesteckt werden kann. Der Hohlquerschnitt der Strebe kann in einer vorteilhaften Ausführungsform auch mit einem akustisch aktiven Material gefüllt sein, etwa ausgeschäumt sein. In einer Ausführungsform kann auch eine Buchse aus einem Elastomer in die Bohrung gesetzt sein, um, ähnlich wie bei Fahrwerksteilen, eine nachgiebige Anbindung der Versteifungsstrebe an den Unterboden zu erreichen.

Ein bevorzugtes Herstellverfahren für das Unterbodenaussteifungs- und Verkleidungsmodul umfasst die folgenden Schritte:
a) Bereitstellen des flächigen Verkleidungsbauteils und der zumindest einen Versteifungsstrebe, und
b) Positionieren der zumindest einen Versteifungsstrebe auf dem flächigen Verkleidungsbauteil zumindest entlang des vorgegebenen Lastpfads und stoffschlüssig Verbinden der Versteifungsstrebe mit dem flächigen Verkleidungsbauteil.

In einer anderen Ausführungsform kann im Schritt a) Bereitstellen der zumindest zwei Lagen und im Schritt b) Einlegen der Versteifungsstrebe in die Rinne der einen Lage, danach darüber Anordnen der anderen Lage, ausgeführt werden.

Im Schritt b) kann ferner ein Thermoformschritt ausgeführt werden, um die Versteifungsstrebe stoffschlüssig mit dem Verkleidungsbauteil zu verbinden. Thermoformen ist aus der Fertigung von Verkleidungsteilen bekannt, wobei eine Thermoformanlage mit geringem Aufwand zur Fertigung des erfindungsgemäßen Unterbodenaussteifungs- und Verkleidungsmoduls umgerüstet werden kann. Die Versteifungsstrebe(n) werden hierzu vor dem Schließen des Formwerkzeugs zusammen mit der/den Lagen des Verkleidungsbauteils in letzteres eingelegt, wobei das Verkleidungsbauteil bzw. die Lagen des Verkleidungsbauteils durch Hitzeeinwirkung mit der/den Versteifungsstrebe(n) verschmelzen oder ein Schmelzklebstoff zum Einsatz kommen kann.

Der erfindungsgemäße Kraftfahrzeug-Unterboden weist eine Verkleidung auf, die mit einem Unterbodenabschnitt verbunden ist und verfügt über eine oder mehrere Versteifungsstrebe(n), wobei die Verkleidung und die Versteifungsstrebe(n) durch ein erfindungsgemäßes Unterbodenaussteifungs- und Verkleidungsmodul bereitgestellt werden, wobei das Unterbodenverkleidungsteil und die Versteifungsstrebe des Unterbodenaussteifungs- und Verkleidungsmoduls mit gemeinsamen Krafteinleitungspunkten des Unterbodenabschnitts verbunden sind. Der Lastpfad bzw. die Lastpfade entlang dem/derer die Versteifungsstrebe(n) verlaufen, verbinden hierbei die Krafteinleitungspunkte, sodass der Unterbodenabschnitt zwischen den Krafteinleitungspunkten ausgesteift wird. Um eine umfassende und mehrachsige Aussteifung zu erreichen wird vorteilhaft ein Unterbodenaussteifungs- und Verkleidungsmodul mit einer Vielzahl von Versteifungsstreben auf unterschiedlichen Lastpfaden eingesetzt. Bei dem erfindungsgemäßen Unterboden lassen sich defekte Versteifungsstreben und/oder Anbindungsvorrichtungen leichter als bisher Austauschen, da nicht zuerst die Verkleidung abgenommen werden muss, sondern die jeweiligen Versteifungsstreben als eine Einheit zusammen mit dem Verkleidungsbauteil entnommen und ausgetauscht werden können.

Zur Montage des erfindungsgemäßen Kraftfahrzeug-Unterbodens werden erfindungsgemäß zumindest die folgenden Schritte ausgeführt:
a) Bereitstellen des Unterbodenabschnitts und des Unterbodenaussteifungs- und Verkleidungsmoduls,
b) Positionieren des Unterbodenaussteifungs- und Verkleidungsmoduls an dem Unterbodenabschnitt, so dass die Anbindungsvorrichtungen der Versteifungsstrebe des Unterbodenaussteifungs- und Verkleidungsmoduls über den Krafteinleitungspunkten des Unterbodenabschnitts liegen,
c) Verbinden der Anbindungsvorrichtungen des Unterbodenaussteifungs- und Verkleidungsmoduls mit den Krafteinleitungspunkten des Unterbodenabschnitts, dadurch gleichzeitig Befestigen des nichttragenden flächigen Verkleidungsbauteils und Versteifungsstrebe an dem Unterbodenabschnitt.

Der Vorteil, der durch den Einsatz des erfindungsgemäßen Unterbodenaussteifungs- und Verkleidungsmoduls erreicht wird ist, dass zur Anbringung der Verkleidung und der Versteifungsstreben nur ein Schritt ausgeführt werden muss und dabei nur ein Satz Verbindungsmittel, etwa Schrauben, verwendet werden. Die Montage kann daher schneller erfolgen, was die Produktionskosten eines Kraftfahrzeugs, das einen erfindungsgemäßen Unterboden hat, deutlich senken kann.

Diese und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Die Figuren sind lediglich eine schematische Darstellung einer Ausführungsform der Erfindung.

Dabei zeigen:
- Fig. 1: eine Draufsicht auf das Unterbodenaussteifungs- und Verkleidungsmodul,
- Fig. 2: einen Teil-Querschnitt des Unterbodenaussteifungs- und Verkleidungsmoduls.

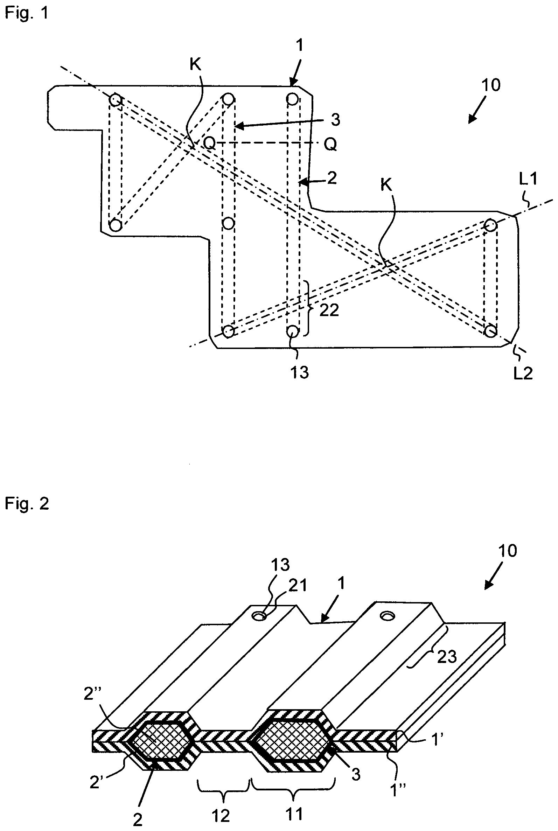

Fig. 1 zeigt das erfindungsgemäße Unterbodenaussteifungs- und Verkleidungsmodul 10 in einer Draufsicht; es weist mehrere Versteifungsstreben 2,3 auf. Die Versteifungsstreben 2,3 sind ihrer Länge nach stoffschlüssig mit dem Verkleidungsbauteil 1 verbunden und haben an ihren Enden 22,23 (siehe auch Fig. 2) jeweils eine Bohrung 21, die jeweils passend über einer Bohrung 13 des Verkleidungsbauteils 1 angeordnet ist, wobei die Bohrungen 13,21 zusammen die Anbindungsvorrichtung bilden, die mit einem Krafteinleitungspunkt des Unterbodens verbunden werden soll. Einige der Versteifungsstreben 2,3 überkreuzen sich in den Punkten K, wobei sie an den Punkten K miteinander verbunden sein können oder nicht, wenn eine gegenseitige Verschiebbarkeit erwünscht ist. Durch die Bohrungen 13 des Unterbodenaussteifungs- und Verkleidungsmoduls 10 wird jeweils eine Schraube oder ein ähnliches Verbindungsmittel geführt, mit der es mit dem Unterboden verschraubt wird, sodass über die Versteifungsstreben 2,3 im Fahrbetrieb Betriebskräfte übertragen werden können.

Das Verkleidungsbauteil 1 erfüllt hierbei keine lasttragende Funktion, sondern in erster Linie eine Abdeckungsfunktion, ähnlich wie bekannte Unterbodenverkleidungen. Die Versteifungsstreben 2,3 sind dazu vorgesehen kraftleitend an Krafteinleitungspunkte eines Kraftfahrzeug-Unterbodens angebunden zu werden, um eine Kraftfahrzeugkarosserie auszusteifen. Neben der Aussteifung der Kraftfahrzeugkarosserie wird durch die Streben auch eine durchhängesichere Befestigung des Verkleidungsbauteils 1 erreicht, das beispielsweise aus einer dünnwandigen Kunststoffplatte bestehen kann. Außerdem bewirken die Versteifungsstreben auch eine hohe Aussteifung des Verkleidungsbauteils mit verbesserten NVH-Eigenschaften (Noise Vibration Harshness). Das Verkleidungsbauteil kann auch dünner ausgelegt werden als übliche Verkleidungen. Die Versteifungsstreben 2,3 folgen jeweils einem vorbestimmten Lastpfad L1,L2, dessen Verlauf in Abhängigkeit von Steifigkeitsrandbedingungen für den jeweiligen zu versteifenden Unterboden bestimmt werden kann. Die Montage eines Kraftfahrzeug-Unterbodens, der eine Verkleidung und eine Versteifung aufweist, kann mit dem erfindungsgemäßen Unterbodenaussteifungs- und Verkleidungsmodul 10 schneller als bisher erfolgen, da sowohl die Versteifung als auch die Verkleidung in einem Schritt montiert werden, wobei die selben Krafteinleitungspunkte zum Einsatz kommen.

Ein Querschnitt eines Teils des Unterbodenaussteifungs- und Verkleidungsmoduls 10 ist in Fig. 2 dargestellt, wobei die Schnittebene, die in Fig. 1 gezeigte Ebene Q-Q ist. Der Teil des Unterbodenaussteifungs- und Verkleidungsmoduls 10, der in der Abbildung links an die in der Abbildung linke Versteifungsstrebe 2 angrenzt ist hierbei nicht gezeigt. Das Verkleidungsbauteil 1 weist eine obere 1' und eine untere Lage 1" auf, die jeweils gegenüberliegend eine Rinne 11 haben, die mit dem Querschnitt der Streben 2,3 korrespondiert, wobei die Versteifungsstrebe 2,3 jeweils in den von den Rinnen 11 gebildeten "Aufnahmekanal" eingelegt und mit diesem stoffschlüssig sind. Die Versteifungsstreben 2,3 haben hierbei einen Hohlquerschnitt, wobei das Hohlprofil 2' mit einem Schaum 2" gefüllt ist. Die Lagen 1', 1" liegen in einem Kontaktbereich 12, der sich dort erstreckt, wo die Rinnen 11 nicht vorliegen, an einander an und sind stoffschlüssig verbunden. Die Versteifungsstreben 2,3 sind hierbei so dimensioniert, dass sie die im Fahrbetrieb eines Kraftfahrzeugs am Unterboden auftretenden Kräfte aufnehmen können und zu einer Versteifung der Kraftfahrzeugkarosserie beitragen. Die Kräfte werden vom Unterboden jeweils über die Anbindungsvorrichtungen durch die Versteifungsstreben 2,3 geleitet, wobei die Anbindungsvorrichtungen hier jeweils durch eine im Endabschnitt 23 der Versteifungsstrebe 2,3 vorliegende Bohrung 13,21, die sich durch die Lagen 1',1" und die jeweilige Versteifungsstrebe 2,3 selbst erstreckt, gebildet werden.

## Patentansprüche

1. Unterbodenaussteifungs- und Verkleidungsmodul (10),
das ein flächiges nichttragendes Verkleidungsbauteil (1) aus einem Kunststoffmaterial aufweist, wobei mit dem Verkleidungsbauteil (1) zumindest eine Versteifungsstrebe (2) stoffschlüssig verbunden ist, die sich entlang eines vorgegebenen Lastpfads (L1) erstreckt und an ihren Endabschnitten (22,23) jeweils eine Anbindungsvorrichtung aufweist (13), mit der sie gemeinsam mit dem Verkleidungsbauteil (1) an Krafteinleitungspunkten mit einem vorgegebenen Unterbodenabschnitt verbindbar ist, wobei das Verkleidungsbauteil (1) zumindest zwei Lagen (1',1") aufweist, zwischen denen die Versteifungsstrebe (2) eingebettet ist, **dadurch gekennzeichnet, dass**
eine der Lagen (1',1") dabei eine akustisch aktive Lage ist mit einer vorbestimmten Porosität oder mit Kammern einer vorbestimmten Größe, die zur Dämpfung bestimmter Frequenzen dimensioniert sind.

2. Unterbodenaussteifungs- und Verkleidungsmodul (10) nach Anspruch 1,
**dadurch gekennzeichnet, dass**
die akustisch aktive Lage (1',1") aus einem Polymerschaum gebildet ist, welche sich in mehrere Kammern untergliedert.

3. Unterbodenaussteifungs- und Verkleidungsmodul (10) nach Anspruch 1 oder 2,
**dadurch gekennzeichnet, dass**
das Unterbodenaussteifungs- und Verkleidungsmodul (10) zumindest eine weitere Versteifungsstrebe (3) aufweist, die sich entlang eines weiteren vorgegebenen Lastpfads (L2) erstreckt, wobei sich die Versteifungsstrebe (2) und die weitere Versteifungsstrebe (3) bevorzugt an einem Punkt (K) kreuzen und besonders bevorzugt an dem Punkt (K) miteinander verbunden sind.

4. Unterbodenaussteifungs- und Verkleidungsmodul (10) nach Anspruch 2 oder 3,
**dadurch gekennzeichnet, dass**
zur Einbettung der Versteifungsstrebe (2) das Verkleidungsbauteil (1) zumindest eine Rinne (11) aufweist, in die die Versteifungsstrebe (2) eingelegt ist, und deren Querschnitt bevorzugt mit dem der Versteifungsstrebe (2) korrespondiert und die mit der Versteifungsstrebe (2) stoffschlüssig verbunden ist.

5. Unterbodenaussteifungs- und Verkleidungsmodul (10) nach zumindest einem der Ansprüche 1 bis 4,
**dadurch gekennzeichnet, dass**
- die Anbindungsvorrichtung eine Bohrung (21,13) ist, die sich durch die Versteifungsstrebe (2) und das Verkleidungsbauteil (1) erstreckt, und/oder
- die Versteifungsstrebe (2) aus einem FVK oder CFK besteht und/oder
- die dem Unterboden zugewandte Lage (1') aus akustischem Dämpfungsmaterial besteht.

6. Kraftfahrzeug-Unterboden mit einer Verkleidung, die mit einem Unterbodenabschnitt verbunden ist, und mit zumindest einer Verstärkungsstrebe,
**dadurch gekennzeichnet, dass**
die Verkleidung und die Verstärkungsstrebe durch ein integrales Unterbodenaussteifungs- und Verkleidungsmodul (10) nach zumindest einem der Ansprüche 1 bis 5 bereitgestellt werden, wobei das Unterbodenverkleidungsteil (1) und die Versteifungsstrebe (2) des Unterbodenaussteifungs- und Verkleidungsmoduls (10) mit gemeinsamen Krafteinleitungspunkten des Unterbodenabschnitts verbunden sind.

## Claims

1. Underbody stiffening and covering module (10),
comprising a two-dimensional non-load bearing covering component (1) made of a plastic material, wherein the covering component (1) is joined by adhesive force to at least one stiffening strut (2), which extends along a predetermined load path (L1) and has at each of its end sections (22, 23) a joining device (13), whereby it can be joined, together with the covering component (1), to a predetermined underbody section at force introduction points, wherein the covering component (1) has at least two layers (1', 1"), between which the stiffening strut (2) in embedded, **characterised in that**
one of the layers (1', 1") is an acoustically active layer with a predetermined porosity or with chambers of a predetermined size dimensioned for damping specific frequencies.

2. Underbody stiffening and covering module (10) according to claim 1,
**characterised in that**
the acoustically active layer (1', 1") is made of a polymer foam and divided into several chambers.

3. Underbody stiffening and covering module (10) according to claim 1 or 2,
**characterised in that**
the underbody stiffening and covering module (10) comprises at least one further stiffening strut (3), which extends along a further predetermined load path (L2), wherein the stiffening strut (2) and the stiffening strut (3) preferably intersect at a point (K) and are particularly preferably joined to each other at the point (K).

4. Underbody stiffening and covering module (10) according to claim 2 or 3,
**characterised in that**
for embedding the stiffening strut (2), the covering component (1) has at least one groove (11), which is placed in the stiffening strut (2) and the cross-section of which preferably corresponds with that of the stiffening strut (2) and which is joined to the stiffening strut (2) by adhesive force.

5. Underbody stiffening and covering module (10) according to any of claims 1 to 4,
**characterised in that**
- the joining device is a hole (21, 23), which extends through the stiffening strut (2) and the covering component (1), and/or
- the stiffening strut (2) is made of FRP or CFRP material, and/or
- the layer (1') facing the underbody is made of an acoustic damping material.

6. Motor vehicle underbody with a covering joined to an underbody section and with at least one stiffening strut,
**characterised in that**
the covering and the stiffening strut are provided as an integral underbody stiffening and covering module (10) according to one or more of claims 1 to 5, wherein the underbody stiffening and covering part (1) and the stiffening strut (2) of the underbody stiffening and covering module (10) are connected to common force introduction points of the underbody section.

## Revendications

1. Module (10) d'habillage et de renforcement de dessous de caisse, qui comporte un élément structural (1) d'habillage plat non porteur constitué d'un matériau en matière plastique, l'élément structural (1) d'habillant étant relié à au moins une barre (2) de renforcement par liaison de matière, qui s'étend le long d'un chemin de charge (L1) prédéfini et comportant sur ses sections (22, 23) d'extrémité respectivement un dispositif de liaison avec lequel elle puisse être reliée conjointement avec l'élément structural (1) d'habillage à des points de transmission de force à une section de dessous de caisse prédéfinie, l'élément structural (1) d'habillage comportant au moins deux couches (1', 1") entre lesquelles est logée la barre (2) de renforcement, **caractérisé en ce qu'**une des couches (1', 1") est ainsi une couche active acoustique ayant une porosité prédéfinie ou ayant des chambres d'une taille prédéterminée, qui sont dimensionnées pour amortir des fréquences déterminées.

2. Module (10) d'habillage et de renforcement de dessous de caisse, selon la revendication 1, **caractérisé en ce que** la couche active acoustique (1', 1") est constituée d'une mousse en polymère qui se subdivise en plusieurs chambres.

3. Module (10) d'habillage et de renforcement de dessous de caisse, selon la revendication 1 ou la revendication 2, **caractérisé en ce que** le module (10) d'habillage et de renforcement de dessous de caisse comporte au moins une autre barre de renforcement (3) qui s'étend le long d'un autre chemin de charge prédéfini, la barre de renforcement (2) et l'autre barre de renforcement (3) se croisent de préférence à un point (K) et de manière particulièrement préférée sont reliées ensemble à un point (K).

4. Module (10) d'habillage et de renforcement de dessous de caisse, selon la revendication 2 ou la revendication 3, **caractérisé en ce que** pour loger la barre de renforcement (2), l'élément structural (1) d'habillage comporte au moins une rainure (11) dans laquelle la barre de renforcement (2) est insérée et dont la section transversale de préférence correspond à la barre de renforcement (2) et qui est reliée par liaison de matière à la barre de renforcement (2).

5. Module (10) d'habillage et de renforcement selon au moins l'une quelconque des revendications 1 à 4, **caractérisé en ce que**
- le dispositif de liaison est un alésage (21, 13) qui s'étend à travers la barre de renforcement (2) et l'élément structural (1) d'habillage, et/ou
- la barre de renforcement (2) est constituée d'un plastique renforcé de fibres ou d'un plastique renforcé de fibres de carbone et/ou
- la couche (1') orientée vers le dessous de caisse est constituée d'un matériau d'atténuation acoustique.

6. Dessous de caisse de véhicule automobile comprenant un habillage qui est relié à une section de dessous de caisse et à au moins une barre de renforcement, **caractérisé en ce que** l'habillage et la barre de renforcement sont produites selon au moins une des revendications 1 à 5, la partie d'habillage (1) de dessous de caisse et la barre de renforcement (2) du module d'habillage (10) et de renforcement de dessous de caisse sont reliées à des points de transmission de force communs de la section de dessous de caisse.
